# EUROPEAN PATENT SPECIFICATION

(11) **EP 2 284 310 B1**
(45) Date of publication and mention of the grant of the patent: **09.07.2014**
(21) Application number: 09010370.6
(22) Date of filing: 12.08.2009
(51) Int. Cl.: D06F 58/28, D06F 58/20

(54) **A tumble dryer with a heat pump system and a method for controlling a heat pump system for a tumble dryer**
Trommeltrockner mit einer Wärmepumpe und Verfahren zur Kontrolle einer Wärmepumpe für einen Trommeltrockner
Sèche-linge à tambour avec pompe à chaleur et procédé pour faire fonctionner une pompe à chaleur pour un sèche-linge

(43) Date of publication of application: 16.02.2011
(73) Proprietor: Electrolux Home Products Corporation N.V., 1130 Brussel (BE)
(72) Inventor: Bison, Alberto, 33080 Porcia (PN) (IT); Zandona', Stefano, 33080 Porcia (PN) (IT); Ugel, Maurizio, 33080 Porcia (PN) (IT)
(74) Representative: Nardoni, Andrea

(56) References cited:
- EP-A- 1 541 745
- EP-A- 2 077 350
- DE-A1-102005 041 145

## Description

The present invention relates to a tumble dryer with a heat pump system according to the preamble of claim 1. Further, the present invention relates to method for controlling a heat pump system for a tumble dryer according to claim 9.

For a tumble dryer the heat pump technology is a very efficient way to save energy. A usual tumble dryer with heat pump technology uses a reciprocating fixed speed compressor for the refrigerant circuit. This type of compressor has several disadvantages. The design of the compressor is very complex. This compressor is very big and needs a large space. Such a compressor works in an on/off-mode, so that the operating parameters of said compressor cannot be controlled during the operation.

DE 10 2005 041 145 A1 discloses a tumble dryer with a heat pump system. The refrigerant circuit of said heat pump system includes a compressor with a variable power output. The power output of the compressor depends either on detected parameters or on a predetermined scheme.

Document EP 2 077 350 A discloses n electric household appliance (1) having a hot-air generator (7) for feeding/drawing hot air to/from a drying drum (3) along an air-circulating pipe (8); a number of heat exchangers (10, 11) located along the air-circulating pipe (8) to allow a refrigerant to absorb/release heat from/to the airflow circulating in the air-circulating pipe (8); a compression device (9) having movable compression members (9a), and an electric motor (9b) for operating the movable compression members (9a); a fan (14a) for removing heat from the compression device (9); and an electronic central control unit (15), which controls the speed of the electric motor (9b) to achieve an intermediate speed (vint) lower than a maximum speed (vMAX ) of the electric motor (9b), and activates/deactivates the fan (14a) to maintain the temperature (T) of the refrigerant within a predetermined range of a target temperature (To ).

It is an object of the present invention to provide a tumble dryer with a heat pump system and a method for controlling a heat pump system for a tumble dryer, which allow an additional saving of energy.

The object of the present invention is achieved by the tumble dryer according to claim 1.

According to the present invention a central processing unit is provided, which is arranged to evaluate the time development of the physical parameter, and which reduces the rotation speed of the compressor according to the evaluation of the time development of the physical parameter. The control unit of for controlling the rotation speed of the compressor can be part of the central processing unit.

A physical parameter is selected whose time development is an indicator for the time development of the dryness of the laundry. Thus, the evaluation of its time development allows to detect an increasing dryness of the laundry, and according to the increasing dryness the rotation speed of the compressor is reduced, e.g. continuously or gradually or in one or more steps.

The main idea of the present invention is the reduction of the rotation speed of the compressor when the water content in the laundry decreases. The time development of one or more physical parameters corresponding with the dryness of the laundry is a suitable and efficient criterion for controlling the rotation speed of the compressor. Often the values of such physical parameters change abruptly, when the laundry becomes drier. Thus, the increasing dryness of the laundry is recognized by means of said physical parameters and the rotation speed of the compressor can be reduced. The reduced rotation speed of the compressor is sufficient and saves energy, since the excess of energy could not be used and would be lost. That phase of the drying procedure, in which the water content of the laundry is clearly reduced, is referred as a residual drying phase. According to the preferred embodiment of the present invention the first heat exchanger is formed as a condenser of the heat pump system and the second heat exchanger is formed as an evaporator of the heat pump system.

For example, the physical parameter is the difference between the temperature of the air stream at the drum inlet of the air stream and the temperature of the air stream at the drum outlet of the air stream. The difference between the temperature at the drum inlet and the temperature at the drum outlet decreases with the increasing dryness of the laundry.

Alternatively or additionally the physical parameter may be the temperature of the air stream at the air outlet of the second heat exchanger. The temperature at the air outlet of the second heat exchanger also decreases with the increasing dryness of the laundry.

Further, the physical parameter may be the difference between the temperature of the air stream at the air inlet of the second heat exchanger (which is identical or at least comparable to the temperature of the air stream at the drum outlet for the air stream, thus, this temperature could also be used) and the temperature at the air outlet of the second heat exchanger. The difference between the temperature at the air inlet and the temperature at the air outlet of the second heat exchanger increases with the increasing dryness of the laundry.

According to another embodiment of the present invention the physical parameter is the electrical impedance of the laundry within the drum. The electrical impedance of laundry within the drum increases with the increasing dryness of the laundry.

According to a further embodiment of the present invention the physical parameter is the temperature of the refrigerant in the refrigerant outlet of the second heat exchanger. Said temperature decreases with the increasing dryness of the laundry.

Further, the physical parameter may be the relative humidity of the drying air within the drum. The relative humidity of the drying air within the drum decreases with the increasing dryness of the laundry.

In particular, at least one sensor for detecting the relative humidity of the drying air is arranged within the drum and/or at the drum outlet.

The object of the present invention is further achieved by the method for controlling a heat pump system for a tumble dryer according to claim 9.

According to the present invention the method is provided for a tumble dryer with at least one heat pump system comprising an air stream circuit including at least one drum for receiving laundry to be dried, at least one refrigerant circuit including at least one compressor with a variable rotation speed, a first heat exchanger for a thermal coupling between the air stream circuit and the refrigerant circuit and a second heat exchanger for a further thermal coupling between the air stream circuit and the refrigerant circuit. In particular, the method is provided for a tumble dryer according to the invention, as described above.

The method comprises the following steps:
- detecting at least one physical parameter of the air stream, the refrigerant and/or the laundry as a function of the time,
- evaluating the time development of the physical parameter, and
- reducing the rotation speed of the compressor according to the evaluation of the time development of the physical parameter.

A physical parameter is selected whose time development is an indicator for the time development of the dryness of the laundry. Thus, the evaluation of its time development allows to detect an increasing dryness of the laundry, and according to the increasing dryness the rotation speed of the compressor is reduced, e.g. continuously or gradually or in one or more steps.

The main idea of the inventive method is the reduction of the rotation speed of the compressor when the water content in the laundry decreases. The time development of one or more physical parameters corresponding with the dryness of the laundry is a suitable and efficient criterion for controlling the rotation speed of the compressor. Often such kinds of physical parameters are changed abruptly, when the laundry becomes drier. Thus, the increasing dryness of the laundry is recognized by means of said physical parameters and the rotation speed of the compressor is reduced. The reduced rotation speed of the compressor is sufficient for the further drying procedure and saves energy, since the excess of additional energy could not be used and would be lost.

For example, the physical parameter is the difference between the temperature of the air stream at the drum inlet of the air stream and the temperature of the air steam at the drum outlet of the air stream, which difference decreases with the increasing dryness of the laundry.

Alternatively or additionally the physical parameter may be the temperature of the air stream at the air outlet of the second heat exchanger, which temperature also decreases with the increasing dryness of the laundry.

According to another embodiment of the present invention the physical parameter may be the difference between the temperature of the air stream at an air inlet of the second heat exchanger and the temperature of the air stream at the air outlet of the second heat exchanger, which difference increases with the increasing dryness of the laundry.

Further, the physical parameter is the electrical impedance of the laundry within the drum, which electrical impedance increases with the increasing dryness of the laundry.

According to a further embodiment of the present invention the physical parameter is the temperature of the refrigerant in the refrigerant outlet of the second heat exchanger, which temperature decreases with the increasing dryness of the laundry.

In a preferred embodiment the method according to the present invention provides for a reduction of rotation speed of the compressor after a delay time interval (DTI) has elapsed from the detection of the maximum temperature value of the refrigerant at evaporator outlet.

Further, the physical parameter may be the relative humidity of the drying air within the drum. The relative humidity of the drying air within the drum decreases with the increasing dryness of the laundry.

In particular, at least one sensor for detecting the relative humidity of the drying air is arranged within the drum and/or at the drum outlet.

The invention will be described in further detail with reference to the drawings, in which
- FIG 1: illustrates a schematic diagram of a tumble dryer with a heat pump system according to a preferred embodiment of the present invention,
- FIG 2: illustrates a schematic diagram of the temperature of the air stream at the drum inlet of the air stream, the temperature of the air stream at the drum outlet of the air stream and the temperature at the air outlet of the second heat exchanger (e.g. an evaporator) as functions of the time ac- cording to the preferred embodiment of the present invention,
- FIG 3: illustrates a schematic diagram of the difference between the temperature of the air stream at the air inlet and the temperature at the air outlet of the second heat exchanger (e.g. an evaporator) as a function of the time according to the preferred em- bodiment of the present invention,
- FIG 4: illustrates a schematic diagram of a difference be- tween the temperature of the air stream at the drum inlet of the air stream and the temperature of the air stream at the drum outlet of the air stream as a function of the time according to the preferred embodiment of the present invention,
- FIG 5: illustrates a schematic diagram of the temperature of the air stream at the air inlet of the second heat exchanger (e.g. an evaporator) and the tem- perature of the air stream at the air outlet of the second heat exchanger as functions of the time ac- cording to the preferred embodiment of the present invention,
- FIG 6: illustrates a schematic diagram of an electrical impedance of the laundry in a drum as function of the time t according to further embodiment of the present invention,
- FIG 7: illustrates a schematic diagram of the temperature of the air stream at the drum inlet for the air stream, the temperature of the air stream at the drum outlet for the air stream and the refrigerant temperature at the refrigerant outlet of the second heat exchanger (e.g. an evaporator) as functions of the time according to a further embodiment of the present invention, and
- FIG 8: illustrates a schematic diagram of the relative hu- midity of the air stream at the drum outlet for the air stream as function of the time according to a further embodiment of the present invention.

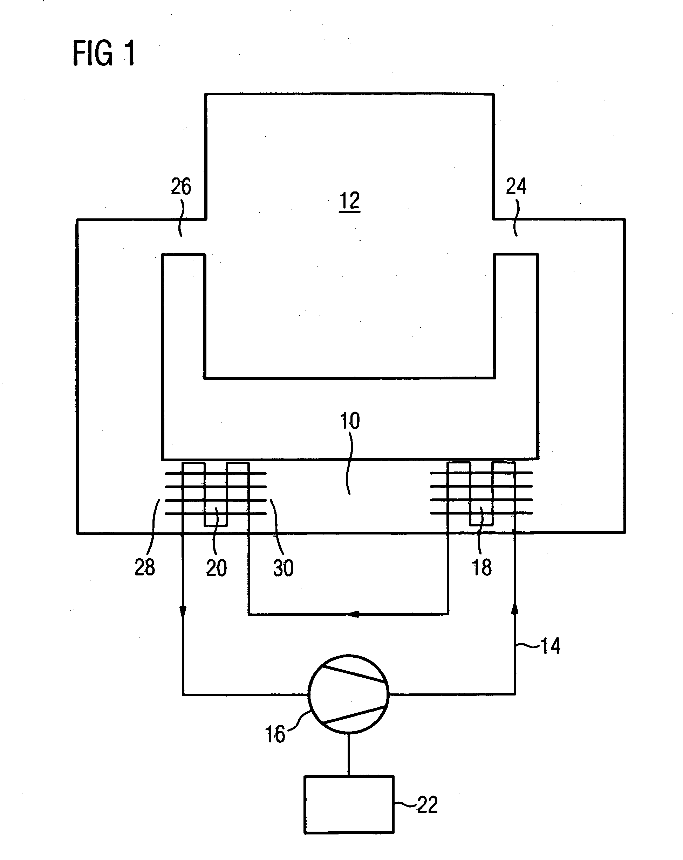

FIG 1 illustrates a schematic diagram of a tumble dryer with a heat pump system according to a preferred embodiment of the present invention. In FIG 1 only the substantial components of the tumble dryer with the heat pump system are shown. The tumble dryer with a heat pump system comprises an air stream circuit 10, a drum 12, a refrigerant circuit 14, a compressor 16, a first heat exchanger 18, a second heat exchanger 20 and a control unit 22.

The drum 12 is an integrated part of the air stream circuit 10. The drum 12 is provided for receiving laundry. In a similar way, the compressor 16 is an integrated part of the refrigerant circuit 14. The air stream circuit 10 and the refrigerant circuit 14 are thermally coupled by the first heat exchanger 18 and the second heat exchanger 20. The first heat exchanger works as a condenser 18. The second heat exchanger works as an evaporator 20. The control unit 22 is provided for controlling the compressor 16. In particular, the control unit 22 is provided for controlling the rotation speed of the compressor 16.

Further, the tumble dryer may comprise several kinds of sensor elements, which are not shown in FIG 1. For example, the sensor elements may be provided for detecting the temperature, the relative humidity and/or the electrical impedance at suitable positions of the tumble dryer. In particular, the sensor elements for detecting the temperature of the air stream may be arranged at a drum air inlet 24, at a drum air outlet 26, at an evaporator air inlet 28 and/or at an evaporator air outlet 30.

In the air stream circuit 10 the air stream is generated by at least one fan, which is not shown in FIG 1. For example, the fan may be arranged at or in the environment of a drum air inlet 24. In FIG 1 the air stream circulates counter-clockwise in the air stream circuit 10. In this example, the air stream circuit 10 is a closed circuit.

A refrigerant flows in the refrigerant circuit 14. In FIG 1 the refrigerant flows counter-clockwise in the refrigerant circuit 14. The refrigerant is compressed and heated by the compressor 16. The heated refrigerant reaches the condenser 18. In the condenser 18 the air stream is heated and the refrigerant is condensed and cooled down. Between the condenser 18 and the evaporator 20 the refrigerant is cooled down and preferably expanded by suitable means, which are not shown in FIG 1. In the evaporator 20 the air stream is cooled down and the refrigerant is warmed up.

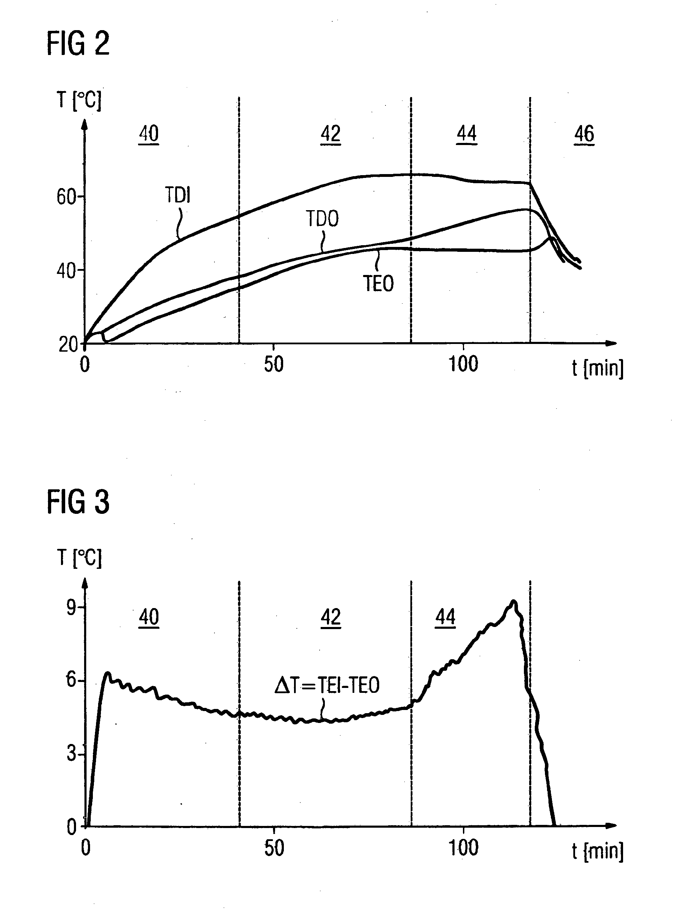

FIG 2 illustrates a schematic diagram of a temperature TDI at the drum air inlet 24, a temperature TDO at the drum air outlet 26 and a temperature TEO at the evaporator air outlet 30 as a function of the time t. FIG 2 clarifies that the dry process can be subdivided into four phases 40, 42, 44 and 46.

During a warm up phase 40 the temperatures TDI, TDO and TEO increase. At the end of the warm up phase 40 the temperature TDI at THE drum inlet 11 is plainly higher than the temperature TDO and TEO at the drum outlet 11 and evaporator outlet 11, respectively. The temperature TDO at the drum outlet 11 and the temperature TEO at the evaporator outlet 11 remain substantially within the same order of magnitude at the end of the warm up phase 40.

During a main drying phase 42 the differences between the temperature TDI on the one hand and the temperatures TDO and TEO on the other hand are substantially maintained. In the main drying phase 42 all the temperatures TDI, TDO and TEO increase slowly.

During a residual drying phase 44 the temperatures TDI and TEO remain substantially constant, while the temperature TDO increases in a relevant way. In the residual drying phase 44 the moisture of the laundry in the drum 12 is reduced, since the energy introduced into the drum 12 by the air stream is not completely used for extracting the water from the laundry. Thus, the unused energy causes the increase of temperature in the air stream.

During a cooling phase 46 the temperatures TDI, TDO and TEO reach at last their original values.

The temperature difference between TDI and TDO in the main drying phase 42 is about 20°C. This means that a huge part of the heat carried by the air stream is effectively used to extract the water from the laundry. However, this does not happen in the subsequent residual drying phase 44, in which the temperature difference between TDI and TDO sinks down to about 5°C. The air stream does not exchange such an amount of heat with the water in the laundry and keeps most of its energy content, which results in the increased temperature TDO. This energy cannot be used and is effectively lost.

The decreasing temperature difference between TDI and TDO could also be considered as an increasing temperature difference between TDO and TEO. Both temperature differences can be used as parameters for controlling the drying process. In particular, the flow rate of the refrigerant circuit 14 can be controlled by setting up the rotation speed of the compressor 16.

The rotation speed of the compressor 16 can be controlled in dependence of the temperature of the air stream. During the warm up phase 40 the rotation speed of the compressor 16 is usually set at its maximum value in order to speed up the heating up of the refrigerant circuit 14.

During the main drying phase 42 different concepts for controlling the rotation speed of the compressor 16 can be used in order to privilege the drying time or the energy consumption. In the main drying phase 42 the temperature difference between TDI and TDO remains almost constant.

The beginning of the residual drying phase 44, in which the temperature difference between TDI and TDO decreases rapidly, can be identified by the detected temperature TDO or by the detected temperature difference between TDO on the on hand and TDI or TEO on the other hand. At the beginning of the residual drying phase 44 the rotation speed of the compressor 16 is reduced in order to decrease the energy given to the air stream circuit 10. Thus, only that energy, which can really be used for drying the last part of the laundry, is input to the air stream circuit 10.

In particular, the following detected or detectable parameters can be used for controlling the rotation speed of the compressor 16:
- the temperature TDO at the drum air outlet 26,
- the difference between the temperature TDI at the drum air inlet 24 and the temperature TDO at the drum air outlet 26, or
- the difference between the temperature TDO at the drum air outlet 24 and the temperature TEO at the evaporator outlet 26.

The aforementioned differences between TDI and TDO or between TDO and TEO, respectively, are more precise, since the beginning of the residual drying phase 44 is more clearly recognizable.

FIG 3 illustrates a schematic diagram of a difference ΔT between the temperature TEI of the air stream at the evaporator air inlet 28 and the temperature TEO of the air stream at the evaporator air outlet 30 as a function of the time t according to the preferred embodiment of the present invention.

The difference ΔT between the temperature TEI at the evaporator air inlet 28 and the temperature TEO at the evaporator air outlet 30 during the warm up phase 40 and particularly during the main drying phase 42 do not show any extraordinary behaviour. However, the difference between the temperatures TEI and TEO increases rapidly during the residual drying phase 44.

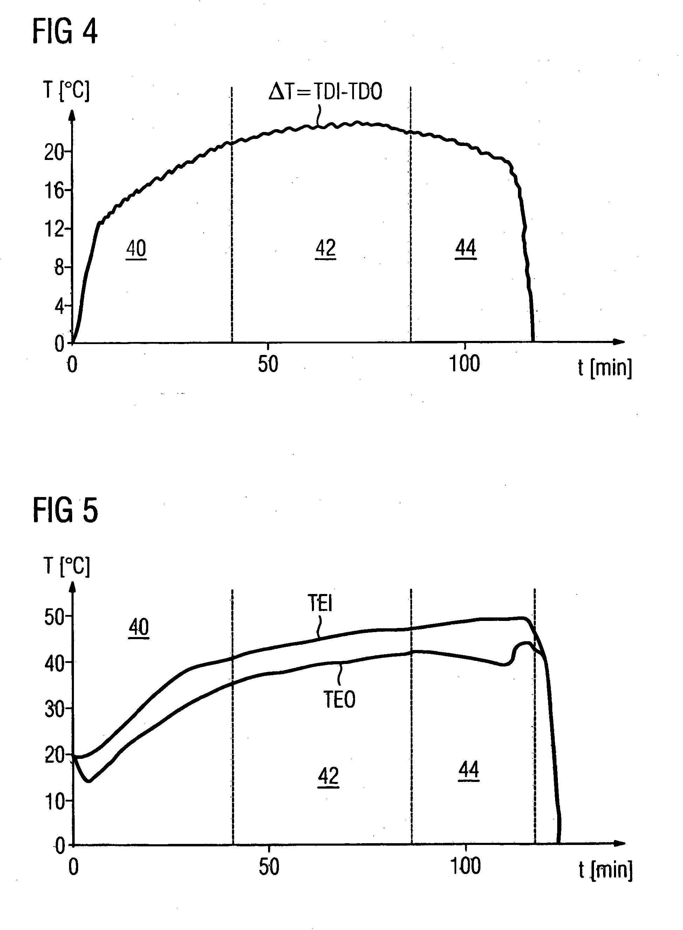

FIG 4 illustrates a schematic diagram of a difference ΔT between the temperature TDI of the air stream at the drum air inlet 24 and the temperature TDO of the air stream at the drum air outlet 26 as a function of the time t according to the preferred embodiment of the present invention.

The difference ΔT between the temperature TDI at the drum inlet 24 and the temperature TDO at the drum outlet 26 as function of the time t is substantially constant during the main drying phase 42 and decreases in the residual drying phase 44.

FIG 5 illustrates a schematic diagram of the temperature TEI of the air stream at the evaporator air inlet 28 and the temperature TEO of the air stream at the evaporator air outlet 30 as functions of the time t according to the preferred embodiment of the present invention.

The temperature TEI at the evaporator air inlet 28 as function of the time t substantially increases during the main drying phase 42 and the residual drying phase 44. However, the temperature TEO at the evaporator air outlet 30 as function of the time t increases during the main drying phase 42 and decreases in the residual drying phase 44. Thus, the functions shown in FIG 3, FIG 4 and FIG 5 are suitable to recognize the beginning of the residual drying phase 44. The detection of the corresponding values of these temperatures and differences of temperatures as function of the time t allows the identification of the residual drying phase 44.

Such diagrams of temperatures or differences of temperatures as function of the time t are be kept as feedback reference to introduce always the optimum energy level by recognizing the beginning of the residual drying phase 44 and changing the rotation speed of the compressor 16.

Further, a minimum value for the rotation speed of the compressor 16 can be set over the rotation speed range of the compressor 16.

The aim of controlling the rotation speed of the compressor 16 is to avoid fluctuations of the temperatures and of the differences of temperatures. Said temperatures and of the differences of temperatures should be kept constant as much as possible. The control of the rotation speed of the compressor 16 allows during the residual drying phase 44 the same or a similar developing of the temperatures and differences of temperatures as in the main drying phase 42.

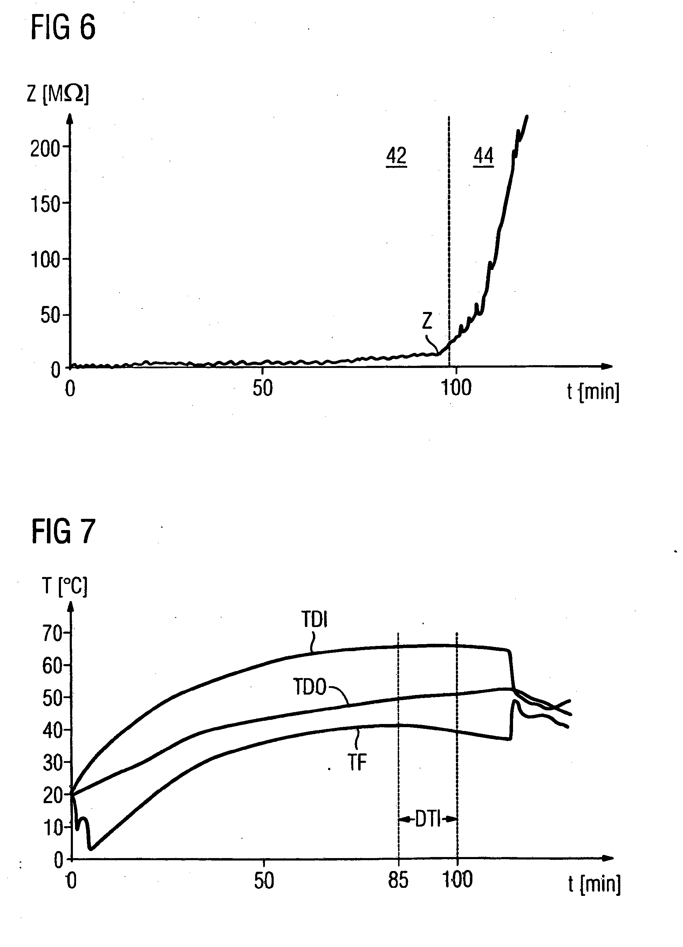

FIG 6 illustrates a schematic diagram of an electrical impedance Z of the laundry in the drum 12 as a function of the time t according to further embodiment of the present invention. The proper electrical impedance is a function oscillating with big amplitudes at high frequencies. The electrical impedance Z shown in FIG 6 is a filtered function of said proper impedance.

There is only a slowly increasing electrical impedance Z in the main drying phase 42. However, during the residual drying phase 44 the electrical impedance Z increases rapidly. The electrical impedance Z of the laundry provides a further way to recognize the beginning of the residual drying phase 44.

In this case, the tumble dryer may have a set of electrodes within the drum 12 or at the drum inlet 24 or drum outlet 26 in order to detect the conductivity and/or the resistance of the laundry inside the drum 12. The conductivity and the resistance of the laundry are a property depending on the dryness of the laundry. The electrical impedance Z of the laundry is always increasing during the drying procedure. In practise the laundry closes an electrical circuit comprising different metallic sensors contacting the clothes and electrically insulated one from the other such as different portions of the metallic drum, metallic part of the lifters and parts of the drum, different parts of the lifters, electrodes adapted to contact the laundry arranged at the clothes loading/unloading opening and portions of the drum and different electrodes.

FIG 7 illustrates a schematic diagram of the temperature TDI at the drum air inlet 24, the temperature TDO at the drum air outlet 26 and a refrigerant temperature TF at the refrigerant outlet of the evaporator 20 as functions of the time t according to a further embodiment of the present invention.

The refrigerant temperature TF at the refrigerant outlet of the evaporator 20 as functions of the time t is similar to the function of the temperature TEO of the air stream at the evaporator air outlet 30 in FIG 2. However some differences exist in correspondence of the beginning of the residual drying phase 44, since it has been noted that the trend over time of the refrigerant temperature TF changes earlier with respect to the detected starting point of the decreasing of the temperature difference between TDI and TDO. In particular it has been noted that the refrigerant temperature TF at the refrigerant outlet of the evaporator 20 starts to decreases early than the beginning of the decreasing of temperature difference between TDI and TDO. In other words the residual drying phase 44 begins after the refrigerant has reached its maximum temperature value during the drying cycle.

In details the refrigerant temperature TF tends to increase after the drying cycle has been started due to the thermal load of the evaporation water that releases heat to the refrigerant thereby causing the latter to became gas and at the same time superheating the part of the refrigerant already in gas phase. When the thermal load associated to the air in the evaporator 20 decreases, i.e. there is not enough water since the laundry is becoming less and less wet, the heat released is not sufficient to keep superheating the refrigerant so that the refrigerant temperature tend to decrease after having reach a maximum value. It has been noted that the beginning of the residual drying phase 44, in which the temperature difference between TDI and TDO starts to decrease, occurs after a Delay Time Interval DTI has elapsed from the moment in which the refrigerant temperature TF tends to decrease (after the maximum value has been reached).

FIG 7 clarifies that the change from the positive slope to the negative slope of the refrigerant temperature TF correlates with the beginning of the residual drying phase 44. It is to be noted that the part of curves depicted in figure 7 on the right where the TDI abruptly drops and the TF suddenly increases refers to the cooling phase 46 (similarly to figure 2) when the compressor is deactivated.

FIG 7 shows further that the difference between the temperature TDI at the drum air inlet 24 and the temperature TDO at the drum air outlet 26 decreases later than the change from the positive slope to the negative slope of the refrigerant temperature TF. In practise the difference between the temperature TDI at the drum air inlet 24 and the temperature TDO at the drum air outlet 26 decreases with a Delay Time Interval DTI with respect to moment in which the refrigerant temperature TF has reached the maximum value during the drying cycle.

Hence an embodiment of method according to the present invention provides that the reduction of the rotation speed of the compressor is preferably performed after a Delay Time Interval DTI has elapsed from the detection, during the drying cycle, of the temperature maximum value of the refrigerant at the outlet of the evaporator 20.

An accurate data analysis on different tumble dryers with the variable speed compressor at different levels of input power has shown that a double filtering process may give a feedback signal, in which the time difference between the result of the evaluation of the refrigerant temperature TF and the result of the evaluation of the air stream temperature difference mentioned above is very similar, and allows to make the two signals and their evaluation correspond. Said double filtering process is performed two times by a first order filter with the same time constant. Thus, it is possible to define a common control logic for the reduction of the rotation speed of the compressor 16. It is clear that alternative filtering process can be employed to achieve similar results, for example a single filtering process with an appropriate time constant or any other filtering processes of common techniques.

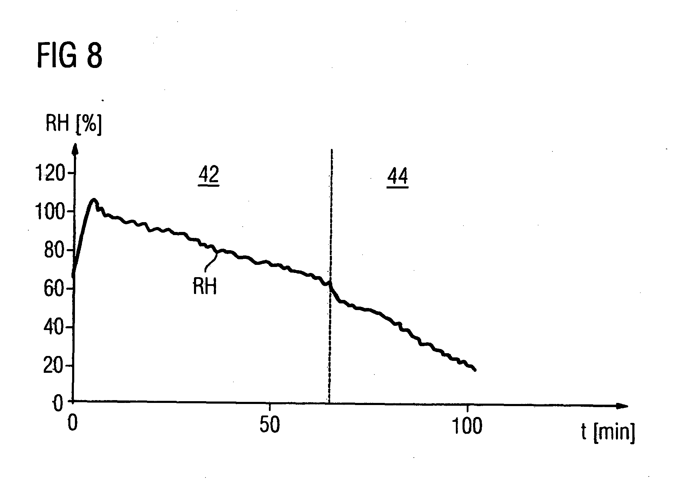

FIG 8 illustrates a schematic diagram of the relative humidity RH of the air stream at the drum air outlet 26 as a function of the time t according to a further embodiment of the present invention. The relative humidity RH of the air stream within the drum 12 decreases when the laundry becomes dry. Since the behaviour of the relative humidity RH is repeatable, the residual drying phase 44 can be recognized.

According to FIG 8 the relative humidity RH starts with a high value and decreases slowly during the main drying phase 42. In the residual drying phase 44 the relative humidity RH decreases more rapidly. Thus, the beginning of the residual drying phase 44 can be recognized by the development of the relative humidity RH.
When the rotation speed of the compressor 16 is reduced after the beginning of the residual drying phase 44, then only that energy is input to the air stream circuit 10, which can be really used.

The above physical parameters as functions of the time are suitable to recognize the beginning of the residual drying phase 44. Then the rotation speed of the compressor 16 is reduced, so that energy can be saved.

In a further embodiment of the present invention weighting sensor means are provided to determine the amount of the clothes loaded inside the drum and in response to said detection the control unit adjusts the rotation speed of the compressor accordingly. For example in case of half-load detected by the weighting sensor means with respect to the full-load capacity of the drum, the controls unit is adapted to decrease the rotation speed of the compressor when compared to the rotation speed used for a full-load cycle. As an alternative or in addition, the data relating to the amount of the clothes can be inputted directly or selected by the user into the control unit at the control panel and in particular a half-load drying cycle can be selectable.
Additionally or in alternative to the above, the weighting sensor means are adapted to detect the decreasing of the weight of the clothes due to the water evaporation during the drying cycle and to transmit the data relating to the weight variation to the control unit which in turn adjusts the rotation speed of the compressor so that the rotation speed decreases while the clothes weight decreases.

In other words, according to the present invention, the method for controlling a variable rotation speed compressor comprises detecting the decreasing of the weight of the clothes due to the water evaporation during the drying cycle, and in response to the weight variation, controlling the rotation speed of the compressor so that the rotation speed decreases while the clothes weight decreases.

Although an illustrative embodiment of the present invention has been described herein with reference to the accompanying drawings, it is to be understood that the present invention is not limited to those precise embodiments, and that various other changes and modifications may be affected therein by one skilled in the art without departing from the scope or spirit of the invention. All such changes and modifications are intended to be included within the scope of the invention as defined by the appended claims.

**List of reference numerals**
- 10: air stream circuit
- 12: drum
- 14: refrigerant circuit
- 16: compressor
- 18: first heat exchanger, condenser
- 20: second heat exchanger, evaporator
- 22: control unit
- 24: drum air inlet
- 26: drum air outlet
- 28: evaporator air inlet
- 30: evaporator air outlet
- 40: warm up phase
- 42: main drying phase
- 44: residual drying phase
- 46: cooling phase

- t: time
- TDI: temperature at the drum inlet
- TDO: temperature at the drum outlet
- TEI: temperature at the evaporator inlet
- TEO: temperature at the evaporator outlet
- TF: refrigerant temperature at the evaporator outlet
- ΔT: difference between two temperatures
- Z: electrical impedance of the laundry
- RH: relative humidity

## Claims

1. A tumble dryer with at least one heat pump system, which tumble dryer comprises:
- an air stream circuit (10) including at least one drum (12) for receiving laundry to be dried,
- at least one refrigerant circuit (14) including at least one compressor (16) with a variable rotation speed,
- a first heat exchanger (18) for a thermal coupling between the air stream circuit (10) and the refrigerant circuit (14),
- a second heat exchanger (20) for a further thermal coupling between the air stream circuit (10) and the refrigerant circuit (14),
- a control unit (22) for controlling the rotation speed of the compressor (16), and
- at least one sensor for detecting at least one physical parameter (TDI, TDO; TEI, TEO; TF; Z; RH) of the air stream, the refrigerant and/or the laundry as a function of the time,
**characterized in, that**
- a central processing unit is provided,
- which is arranged to evaluate the time development of the physical parameter (TDI, TDO, TEI, TEO; TF; Z; RH), and
- which reduces the rotation speed of the compressor (16) according to the evaluation of the time development of the physical parameter (TDI, TDO, TEI, TEO; TF; Z; RH).

2. The tumble dryer according to claim 1,
**characterized in, that**
the first heat exchanger is formed as a condenser (18) of the heat pump system and the second heat exchanger is formed as a evaporator (20) of the heat pump system.

3. The tumble dryer according to claim 1 or 2, **characterized in, that**
the physical parameter is the difference (ΔT) between the temperature (TDI) of the air stream at the drum inlet (24) of the air stream and the temperature (TDO) of the air stream at the drum outlet (26) of the air stream.

4. The tumble dryer according to any one of the preceding claims,
**characterized in, that**
the physical parameter is the difference (ΔT) between the temperature (TEI) of the air stream at the air inlet (28) of the second heat exchanger (20) and the temperature (TEO) of the air stream at the air outlet (30) of the second heat exchanger (20).

5. The tumble dryer according to any one of the preceding claims,
**characterized in, that**
the physical parameter is the electrical impedance of the laundry within the drum (12).

6. The tumble dryer according to any one of the preceding claims,
**characterized in, that**
the physical parameter is the temperature (TF) of the refrigerant in the refrigerant outlet of the second heat exchanger (20).

7. The tumble dryer according to any one of the preceding claims,
**characterized in, that**
the physical parameter is the relative humidity (RF) of drying air within the drum (12), wherein at least one sensor for detecting the relative humidity (RF) of the drying air is arranged within the drum (12) and/or at the drum outlet (28).

8. The tumble dryer according to any one of the preceding claims,
**characterized in, that**
weighting sensor means are provided to detect the decreasing of the weight of the clothes due to the water evaporation during the drying cycle, in response to the weight variation said control unit (22) is adapted to adjust the rotation speed of the compressor (16) so that the rotation speed deceases while the clothes weight decreases.

9. A method for controlling a tumble dryer with at least one heat pump system comprising an air stream circuit (10) including at least one drum (12) for receiving laundry to be dried, at least one refrigerant circuit (14) including at least one compressor (16) with a variable rotation speed, a first heat exchanger (18) for a thermal coupling between the air stream circuit (10) and the refrigerant circuit (14) and a second heat exchanger (20) for a further thermal coupling between the air stream circuit (10) and the refrigerant circuit (14), which method comprises the following steps:
- detecting at least one physical parameter (TDI, TDO;
TEI, TEO; TF; Z; RH) of an air stream, a refrigerant and/or laundry as a function of the time,
- evaluating the time development of the physical parameter (TDI, TDO, TEI, TEO; TF; Z; RH),
- reducing the rotation speed of the compressor (16) according to the evaluation of the time development of the physical parameter (TDI, TDO, TEI, TEO; TF; Z; RH).

10. The method according to claim 9,
**characterized in, that**
the physical parameter is the difference (ΔT) between the temperature (TDI) of the air stream at a drum inlet (24) and the temperature (TDO) of the air stream at a drum outlet (TDO).

11. The method according to any one of the claims 9 to 10, **characterized in, that**
the physical parameter is the difference (AT) between the temperature (TEI) of the air stream at the air inlet (28) of the second heat exchanger (20) and the temperature (TEO) at the air outlet (30) of the second heat exchanger (20).

12. The method according to any one of the claims 9 to 11, **characterized in, that**
the physical parameter is the electrical impedance of the laundry within the drum (12).

13. The method according to any one of the claims 9 to 12, **characterized in, that**
the physical parameter is the temperature (TF) of a refrigerant in the refrigerant outlet of the second heat exchanger.

14. The method according to claim 13,
**characterized in, that**
the reduction of rotation speed of the compressor is performed after a delay time interval (DTI) has elapsed from the detection of the maximum temperature value of the refrigerant.

15. The method according to any one of the claims 9 to 13, **characterized in, that**
the physical parameter is the relative humidity (RF) of the drying air within the drum (12).

## Patentansprüche

1. Trommeltrockner mit mindestens einem Wärmepumpensystem, wobei der Trommeltrockner Folgendes umfasst:
- einen Luftstromkreis (10), der mindestens eine Trommel (12) zum Aufnehmen von zu trocknender Wäsche enthält,
- mindestens einen Kühlmittelkreis (14), der mindestens einen Kompressor (16) mit variabler Drehzahl enthält,
- einen ersten Wärmetauscher (18) für eine thermische Kopplung zwischen dem Luftstromkreis (10) und dem Kühlmittelkreis (14),
- einen zweiten Wärmetauscher (20) für eine weitere thermische Kopplung zwischen dem Luftstromkreis (10) und dem Kühlmittelkreis (14),
- eine Steuereinheit (22) zum Steuern der Drehzahl des Kompressors (16), und
- mindestens einen Sensor zum Erfassen von mindestens einem physikalischen Parameter (TDI, TDO; TEI, TEO; TF; Z; RH) des Luftstroms, des Kühlmittels und/oder der Wäsche als Funktion der Zeit,
**dadurch gekennzeichnet, dass**
- eine zentrale Verarbeitungseinheit bereitgestellt ist,
- die angeordnet ist, die Zeitentwicklung des physikalischen Parameters (TDI, TDO; TEI, TEO; TF; Z; RH) zu beurteilen, und
- die die Drehzahl des Kompressors (16) gemäß der Beurteilung der Zeitentwicklung des physikalischen Parameters (TDI, TDO; TEI, TEO; TF; Z; RH) verringert.

2. Trommeltrockner nach Anspruch 1, **dadurch gekennzeichnet, dass** der erste Wärmetauscher als ein Kondensator (18) des Wärmepumpensystems ausgebildet ist und der zweite Wärmetauscher als ein Verdampfer (20) des Wärmepumpensystems ausgebildet ist.

3. Trommeltrockner nach Anspruch 1 oder 2, **dadurch gekennzeichnet, dass** der physikalische Parameter der Unterschied (ΔT) zwischen der Temperatur (TDI) des Luftstroms am Trommeleinlass (24) des Luftstroms und der Temperatur (TDO) des Luftstroms am Trommelauslass (26) des Luftstroms ist.

4. Trommeltrockner nach einem der vorhergehenden Ansprüche,
**dadurch gekennzeichnet, dass** der physikalische Parameter der Unterschied (ΔT) zwischen der Temperatur (TEI) des Luftstroms am Lufteinlass (28) des zweiten Wärmetauschers (20) und der Temperatur (TEO) des Luftstroms am Luftauslass (30) des zweiten Wärmetauschers (20) ist.

5. Trommeltrockner nach einem der vorhergehenden Ansprüche, **dadurch gekennzeichnet, dass** der physikalische Parameter die elektrische Impedanz der Wäsche in der Trommel (12) ist.

6. Trommeltrockner nach einem der vorhergehenden Ansprüche, **dadurch gekennzeichnet, dass** der physikalische Parameter die Temperatur (TF) des Kühlmittels im Kühlmittelauslass des zweiten Wärmetauschers (20) ist.

7. Trommeltrockner nach einem der vorhergehenden Ansprüche, **dadurch gekennzeichnet, dass** der physikalische Parameter die relative Luftfeuchtigkeit (RF) der trocknenden Luft in der Trommel (12) ist, wobei mindestens ein Sensor für das Erfassen der relativen Luftfeuchtigkeit (RF) der trocknenden Luft in der Trommel (12) und/oder am Trommelauslass (28) angeordnet ist.

8. Trommeltrockner nach einem der vorhergehenden Ansprüche, **dadurch gekennzeichnet, dass** Wägesensormittel bereitgestellt sind, um das Abnehmen des Gewichts der Kleidung aufgrund der Wasserverdampfung während des Trockenzyklus zu erfassen, wobei die Steuereinheit (22) ausgelegt ist, als Reaktion auf die Gewichtsveränderung die Drehzahl des Kompressors (16) anzupassen, sodass die Drehzahl abnimmt, während das Gewicht der Kleidung abnimmt.

9. Verfahren zum Steuern eines Trommeltrockners mit mindestens einem Wärmepumpensystem, umfassend einen Luftstromkreis (10), der mindestens eine Trommel (12) zum Aufnehmen von zu trocknender Wäsche enthält; mindestens einen Kühlmittelkreis (14), der mindestens einen Kompressor (16) mit variabler Drehzahl enthält; einen ersten Wärmetauscher (18) für eine thermische Kopplung zwischen dem Luftstromkreis (10) und dem Kühlmittelkreis (14) und einen zweiten Wärmetauscher (20) für eine weitere thermische Kopplung zwischen dem Luftstromkreis (10) und dem Kühlmittelkreis (14), wobei das Verfahren die folgenden Schritte umfasst:
- Erfassen von mindestens einem physikalischen Parameter (TDI, TDO; TEI, TEO; TF; Z; RH) eines Luftstroms, eines Kühlmittels und/oder von Wäsche als Funktion der Zeit,
- Beurteilen der Zeitentwicklung des physikalischen Parameters (TDI, TDO; TEI, TEO; TF; Z; RH),
- Verringern der Drehzahl des Kompressors (16) gemäß der Beurteilung der Zeitentwicklung des physikalischen Parameters (TDI, TDO; TEI, TEO; TF; Z; RH).

10. Verfahren nach Anspruch 9, **dadurch gekennzeichnet, dass** der physikalische Parameter der Unterschied (ΔT) zwischen der Temperatur (TDI) des Luftstroms an einem Trommeleinlass (24) und der Temperatur (TDO) des Luftstroms an einem Trommelauslass (TDO) ist.

11. Verfahren nach einem der Ansprüche 9 bis 10, **dadurch gekennzeichnet, dass** der physikalische Parameter der Unterschied (ΔT) zwischen der Temperatur (TEI) des Luftstroms am Lufteinlass (28) des zweiten Wärmetauschers (20) und der Temperatur (TEO) am Luftauslass (30) des zweiten Wärmetauschers (20) ist.

12. Verfahren nach einem der Ansprüche 9 bis 11, **dadurch gekennzeichnet, dass** der physikalische Parameter die elektrische Impedanz der Wäsche in der Trommel (12) ist.

13. Verfahren nach einem der Ansprüche 9 bis 12, **dadurch gekennzeichnet, dass** der physikalische Parameter die Temperatur (TF) eines Kühlmittels im Kühlmittelauslass des zweiten Wärmetauschers ist.

14. Verfahren nach Anspruch 13, **dadurch gekennzeichnet, dass** die Verringerung der Drehzahl des Kompressors durchgeführt wird, nachdem ein Verzögerungszeitintervall (DTI) von der Erfassung des Maximaltemperaturwerts des Kühlmittels abgelaufen ist.

15. Verfahren nach einem der Ansprüche 9 bis 13, **dadurch gekennzeichnet, dass** der physikalische Parameter die relative Luftfeuchtigkeit (RF) der trocknenden Luft in der Trommel (12) ist.

## Revendications

1. Sèche-linge à tambour ayant au moins un système de pompe à chaleur, lequel sèche-linge à tambour comprend :
- un circuit de courant d'air (10) comprenant au moins un tambour (12) pour recevoir du linge devant être séché,
- au moins un circuit de fluide frigorigène (14) comprenant au moins un compresseur (16) ayant une vitesse de rotation variable,
- un premier échangeur de chaleur (18) pour un couplage thermique entre le circuit de courant d'air (10) et le circuit de fluide frigorigène (14),
- un second échangeur de chaleur (20) pour un couplage thermique supplémentaire entre le circuit de courant d'air (10) et le circuit de fluide frigorigène (14),
- une unité de commande (22) pour commander la vitesse de rotation du compresseur (16), et
- au moins un capteur pour détecter au moins un paramètre physique (TDI, TDO ; TEI, TEO ; TF ; Z ; RH) du courant d'air, du fluide frigorigène et/ou du linge en fonction du temps,
**caractérisé par le fait qu'**
- une unité de traitement centrale est prévue,
- laquelle est agencée pour évaluer l'évolution dans le temps du paramètre physique (TDI, TDO, TEI, TEO ; TF ; Z ; RH), et
- laquelle réduit la vitesse de rotation du compresseur (16) en fonction de l'évaluation de l'évolution dans le temps du paramètre physique (TDI, TDO, TEI, TEO ; TF ; Z ; RH).

2. Sèche-linge à tambour selon la revendication 1,
**caractérisé par le fait que**
le premier échangeur de chaleur est formé par un condenseur (18) du système de pompe à chaleur et le second échangeur de chaleur est formé par un évaporateur (20) du système de pompe à chaleur.

3. Sèche-linge à tambour selon l'une des revendications 1 ou 2,
**caractérisé par le fait que**
le paramètre physique est la différence (ΔT) entre la température (TDI) du courant d'air à l'entrée de tambour (24) du courant d'air et la température (TDO) du courant d'air à la sortie de tambour (26) du courant d'air.

4. Sèche-linge à tambour selon l'une quelconque des revendications précédentes,
**caractérisé par le fait que**
le paramètre physique est la différence (ΔT) entre la température (TEI) du courant d'air à l'entrée d'air (28) du second échangeur de chaleur (20) et la température (TEO) du courant d'air à la sortie d'air (30) du second échangeur de chaleur (20).

5. Sèche-linge à tambour selon l'une quelconque des revendications précédentes,
**caractérisé par le fait que**
le paramètre physique est l'impédance électrique du linge à l'intérieur du tambour (12).

6. Sèche-linge à tambour selon l'une quelconque des revendications précédentes,
**caractérisé par le fait que**
le paramètre physique est la température (TF) du fluide frigorigène dans la sortie de fluide frigorigène du second échangeur de chaleur (20).

7. Sèche-linge selon l'une quelconque des revendications précédentes,
**caractérisé par le fait que**
le paramètre physique est l'humidité relative (RF) de l'air de séchage à l'intérieur du tambour (12), au moins un capteur pour détecter l'humidité relative (RF) de l'air de séchage étant agencé à l'intérieur du tambour (12) et/ou à la sortie de tambour (28).

8. Sèche-linge à tambour selon l'une quelconque des revendications précédentes,
**caractérisé par le fait que**
des moyens capteurs de mesure de poids sont prévus pour détecter la diminution du poids des vêtements due à l'évaporation d'eau pendant le cycle de séchage, en réponse à la variation de poids ladite unité de commande (22) est apte à ajuster la vitesse de rotation du compresseur (16) de telle sorte que la vitesse de rotation diminue alors que le poids des vêtements diminue.

9. Procédé de commande d'un sèche-linge à tambour ayant au moins un système de pompe à chaleur comprenant un circuit de courant d'air (10) comprenant au moins un tambour (12) pour recevoir du linge devant être séché, au moins un circuit de fluide frigorigène (14) comprenant au moins un compresseur (16) ayant une vitesse de rotation variable, un premier échangeur de chaleur (18) pour un couplage thermique entre le circuit de courant d'air (10) et le circuit de fluide frigorigène (14), et un second échangeur de chaleur (20) pour un couplage thermique supplémentaire entre le circuit de courant d'air (10) et le circuit de fluide frigorigène (14), lequel procédé comprend les étapes suivantes :
- détecter au moins un paramètre physique (TDI, TDO ;
TEI, TEO ; TF ; Z ; RH) d'un courant d'air, d'un fluide frigorigène et/ou du linge en fonction du temps,
- évaluer l'évolution dans le temps du paramètre physique (TDI, TDO, TEI, TEO ; TF ; Z ; RH),
- réduire la vitesse de rotation du compresseur (16) en fonction de l'évaluation de l'évolution dans le temps du paramètre physique (TDI, TDO, TEI, TEO ; TF ; Z ; RH).

10. Procédé selon la revendication 9, **caractérisé par le fait que**
le paramètre physique est la différence (ΔT) entre la température (TDI) du courant d'air à une entrée de tambour (24) et la température (TDO) du courant d'air à une sortie de tambour (TDO).

11. Procédé selon l'une quelconque des revendications 9 à 10,
**caractérisé par le fait que**
le paramètre physique est la différence (ΔT) entre la température (TEI) du courant d'air à l'entrée d'air (28) du second échangeur de chaleur (20) et la température (TEO) à la sortie d'air (30) du second échangeur de chaleur (20).

12. Procédé selon l'une quelconque des revendications 9 à 11,
**caractérisé par le fait que**
le paramètre physique est l'impédance électrique du linge à l'intérieur du tambour (12).

13. Procédé selon l'une quelconque des revendications 9 à 12,
**caractérisé par le fait que**
le paramètre physique est la température (TF) d'un fluide frigorigène dans la sortie de fluide frigorigène du second échangeur de chaleur.

14. Procédé selon la revendication 13, **caractérisé par le fait que**
la réduction de la vitesse de rotation du compresseur est réalisée après qu'un intervalle de temps de retard (DTI) se soit écoulé à partir de la détection de la valeur de température maximale du fluide frigorigène.

15. Procédé selon l'une quelconque des revendications 9 à 13,
**caractérisé par le fait que**
le paramètre physique est l'humidité relative (RF) de l'air de séchage à l'intérieur du tambour (12).
